# FASCICULE DE BREVET EUROPEEN

(11) **EP 3 227 825 B1**
(45) Date de publication et mention de la délivrance du brevet: **13.11.2024**
(21) Numéro de dépôt: 15804434.7
(22) Date de dépôt: 02.12.2015
(51) Int. Cl.: G06K 7/10

(54) **SYSTÈME D'INVENTAIRE D'OBJETS CONTENUS DANS UN ESPACE LIMITÉ PAR UNE ENCEINTE AINSI QU'UN PROCÉDÉ D'INVENTAIRE MIS EN UVRE PAR UN TEL SYSTÈME D'INVENTAIRE**
INVENTARSYSTEM FÜR OBJEKTE IN EINEM VON EINEM GEHÄUSE BEGRENZTEN RAUM SOWIE EIN DURCH SOLCH EIN INVENTARSYSTEM IMPLEMENTIERTES INVENTARVERFAHREN
INVENTORY SYSTEM FOR OBJECTS CONTAINED IN A SPACE BOUNDED BY AN ENCLOSURE AS WELL AS AN INVENTORY METHOD IMPLEMENTED BY SUCH AN INVENTORY SYSTEM

(30) Priorité: 02.12.2014 FR 1461814
(43) Date de publication de la demande: 11.10.2017
(73) Titulaire: Nexess, 06250 Mougins (FR)
(72) Inventeur: RENO, Frédéric, 06250 Mougins (FR); MONBLANC, Jean-Anaël, 06250 Mougins (FR); ILIEV, Plamen, 06250 Mougins (FR)
(74) Mandataire: Cabinet Le Guen Maillet
(86) Numéro de dépôt international: PCT/EP2015/078331
(87) Numéro de publication internationale: WO 2016/087502

(56) Documents cités:
- US-A1- 2006 044 113
- US-A1- 2006 214 773
- US-B1- 7 830 262

## Description

La présente invention concerne un système d'inventaire d'objets contenus dans un espace limité par une enceinte utilisant la technologie d'identification par ondes radiofréquences (RFID : Radio Frequency Identification) ainsi qu'un procédé d'inventaire mis en oeuvre par un tel système d'inventaire.

De manière générale, un système utilisant la technologie RFID est constitué de trois types d'éléments :
- au moins un transpondeur, dit aussi tag, constitué d'un circuit électronique pourvu d'une antenne pour émettre et recevoir des données sous forme d'ondes radiofréquences, ledit circuit comportant au moins une mémoire dans laquelle est stockée un identifiant dudit transpondeur,
- un point de lecture constitué lui aussi d'un circuit électronique pourvu d'une antenne pour émettre et recevoir des données également sous forme d'ondes radiofréquences, et
- une unité de contrôle reliée au point de lecture et mettant en oeuvre une application.

Le fonctionnement d'un tel système RFID est le suivant. Au commencement de la procédure d'identification, le point de lecture émet une onde électromagnétique modulée, dite par la suite de réveil, à destination de chaque tag du système. A sa réception, un tag, situé dans une zone de couverture où le champ électromagnétique généré par le point de lecture est à un niveau suffisamment élevé, sort de son état de veille, devient actif et émet alors une donnée d'identification qui lui est propre sous forme d'une onde électromagnétique modulée. Cette donnée d'identification est reçue par le point de lecture qui procède alors à l'identification du tag considéré. La zone de couverture est généralement comprise entre 0 à 7 mètres dans la direction de rayonnement électromagnétique de l'antenne du point de lecture. Celui-ci peut être pourvu de plusieurs antennes pour augmenter le volume de la zone de couverture du point de lecture.

Un tel système RFID est décrit dans le document de brevet US2006/214773. Dans ce document, afin de singulariser la lecture des tags, la puissance d'émission de l'onde électromagnétique de réveil est augmentée, à partir d'une valeur minimale, jusqu'à obtenir la réponse d'un ou de peu de tags. Au besoin, cette puissance d'émission peut être diminuée.

Une application d'un tel système RFID pour réaliser des inventaires est décrite dans le document de brevet US7830262.

Dans l'application à un système d'inventaire qui est envisagée ici, chaque tag est fixé à un objet, tel qu'un outil servant à la maintenance d'un atelier, d'une usine, etc. Les objets à inventorier sont rangés dans un espace, tel qu'un meuble, une servante, une armoire pourvue ou non d'étagères, de tiroirs, etc. Pour effectuer un inventaire de ces objets, il est nécessaire de confiner l'onde électromagnétique de réveil émise par le point de lecture à l'intérieur de cet espace afin de ne pas prendre en compte dans cet inventaire des tags qui se trouveraient à l'extérieur du meuble. Pour ce faire, cet espace est rendu hermétique aux ondes électromagnétiques émises par le point de lecture, par exemple en le délimitant par une enceinte métallique. Ainsi, seuls les tags à l'intérieur de cette enceinte émettent leurs données d'identification. Donc, seuls les objets rangés dans l'enceinte sont pris en compte au moment de l'inventaire.

Ce type de système d'inventaire est confronté à des problèmes. Tout objet placé dans l'enceinte mais aussi les parois de celle-ci peuvent agir en tant que réflecteurs pour les ondes électromagnétiques émises par la ou les antennes du point de lecture. Ainsi, les ondes directes et les ondes réfléchies peuvent interférer entre elles et créent des maxima mais aussi des minima de puissance dans l'enceinte. Si un tag se trouve à l'endroit d'un minima, la puissance de l'onde électromagnétique de réveil qu'il reçoit peut être insuffisante pour le rendre actif. Il n'émet alors pas ses données d'identification et le point de lecture ne peut donc pas l'identifier. L'inventaire est erroné.

Afin de garantir une répartition optimale du champ électromagnétique rayonné à l'intérieur de l'enceinte métallique, il existe différentes techniques qui consistent à optimiser les positions et emplacements des antennes du point de lecture à l'intérieur de l'enceinte. Le but est de déterminer les positions et le nombre d'antennes pour assurer une couverture de l'onde électromagnétique de réveil sur l'ensemble du volume intérieur de l'enceinte avec un niveau de puissance suffisant pour permettre à tous les tags rangés dans l'enceinte de devenir actif et d'alors émettre leur propres données d'identification.

Ainsi, il est possible de garantir une répartition du champ électromagnétique, à l'intérieur de l'enceinte, de bonne qualité et permettant d'identifier tout objet stocké quel que soit son emplacement.

Lorsque les objets à inventorier réfléchissent eux-mêmes les ondes incidentes, du fait par exemple qu'ils sont métalliques, ce qui est généralement le cas d'outils, ils peuvent augmenter encore le phénomène d'interférences décrit ci-dessus. Contrairement au cas précédent, les interférences ainsi créées et donc la topologie des minima et maxima de puissance créés sont fonction elles-mêmes de la présence ou de l'absence des objets dans l'enceinte. D'un inventaire à un autre, cette topologie peut varier.

Ainsi, la méthode proposée ci-dessus est fortement dépendante des objets, notamment métalliques, contenus dans l'enceinte de stockage. La présence ou l'absence d'objets métalliques dans le volume modifie donc la répartition des champs électromagnétiques et donc la qualité de l'identification.

Le but de la présente invention est de prévoir un système d'inventaire d'objets contenus dans une enceinte métallique qui soit tel qu'il s'affranchit des problèmes d'interférences mentionnés ci-dessus.

Pour ce faire, la présente invention concerne un système d'inventaire d'objets contenus dans un espace délimité par une enceinte, selon la revendication 1.

Selon un autre mode de réalisation de la présente invention, ledit système d'inventaire comporte des balises de référence placées à des endroits fixes dans ladite enceinte, ledit point de lecture étant prévu pour, sur la base des données d'identification reçues des balises de référence, établir une carte des balises de référence actives, à chaque modèle de variation de puissance établi lors de la phase d'apprentissage pour chaque configuration particulière de l'enceinte et des objets qu'elle contient étant associée une carte des balises de référence actives, le modèle de variation de puissance utilisé pour réaliser ledit inventaire étant celui qui est associé à la carte des balises de référence actives pour la configuration d'exploitation de l'enceinte et des objets qu'elle contient au moment dudit inventaire.

Selon une caractéristique additionnelle avantageuse de l'invention, lesdits moyens pour commander la puissance d'émission de ladite onde électromagnétique de réveil par ladite ou chaque antenne sont constitués d'une unité de commande commandant directement ledit point de lecture pour ce faire.

Selon une caractéristique additionnelle avantageuse de l'invention, lesdits moyens pour commander la puissance d'émission de ladite onde électromagnétique de réveil par ladite ou chaque antenne comprennent une unité de contrôle de puissance faisant l'interface entre la ou les sorties antenne dudit point de lecture et la ou lesdites antennes.

La présente invention concerne également un procédé d'inventaire d'objets contenus dans un espace délimité par une enceinte, selon la revendication 5.

Selon une caractéristique additionnelle avantageuse de l'invention, ledit procédé comporte une phase d'apprentissage pendant laquelle un modèle de variation de puissance est établi pour chaque configuration particulière de l'enceinte et des objets qu'elle contient, ledit modèle de variation de puissance utilisé pour réaliser ledit inventaire étant celui correspondant à la configuration d'exploitation de l'enceinte et des objets qu'elle contient.

Selon une caractéristique additionnelle avantageuse de l'invention, ladite phase d'apprentissage comporte une étape de sélection, parmi un ensemble de modèles de variation de puissance prédéterminés, du modèle de variation de puissance qui, pour la configuration de l'enceinte et des objets qu'elle contient, donne le taux de lecture optimal par rapport aux autres modèles de variation de puissance dudit ensemble de modèles.

Selon une caractéristique additionnelle avantageuse de l'invention, ladite phase d'apprentissage comporte les étapes suivantes :
- une étape d'établissement d'une carte de balises de référence actives, et
- une étape de détermination des paramètres d'un modèle de variation de puissance donnant un taux de lecture supérieur à un taux seuil.

Selon une caractéristique additionnelle avantageuse de l'invention, ladite phase d'apprentissage comporte une étape de détermination de la durée optimale du modèle sélectionné.

Selon une caractéristique additionnelle avantageuse de l'invention, ladite phase d'apprentissage comporte une étape de vérification de la répétabilité du procédé d'inventaire pour chacun des modèles de variation de puissance sélectionnée et optimisé.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
La Fig. 1 est une vue schématique d'un système d'inventaire selon un premier mode de réalisation de la présente invention,
La Fig. 2 est un diagramme illustrant la puissance émise par un point de lecture en fonction du temps selon un exemple de modèle de variation de puissance selon la présente invention,
La Fig. 3 est un diagramme illustrant un procédé d'inventaire selon un premier mode de réalisation de l'invention,
La Fig. 4 est un diagramme illustrant la phase d'apprentissage d'un procédé d'inventaire selon un premier mode de réalisation de l'invention,
La Fig. 5 est une vue schématique d'un système d'inventaire selon un second mode de réalisation de la présente invention,
La Fig. 6 est un diagramme illustrant la phase d'apprentissage d'un procédé d'inventaire selon un second mode de réalisation de l'invention, et
La Fig. 7 est un diagramme illustrant un procédé d'inventaire dans sa phase d'exploitation selon un second mode de réalisation de l'invention.

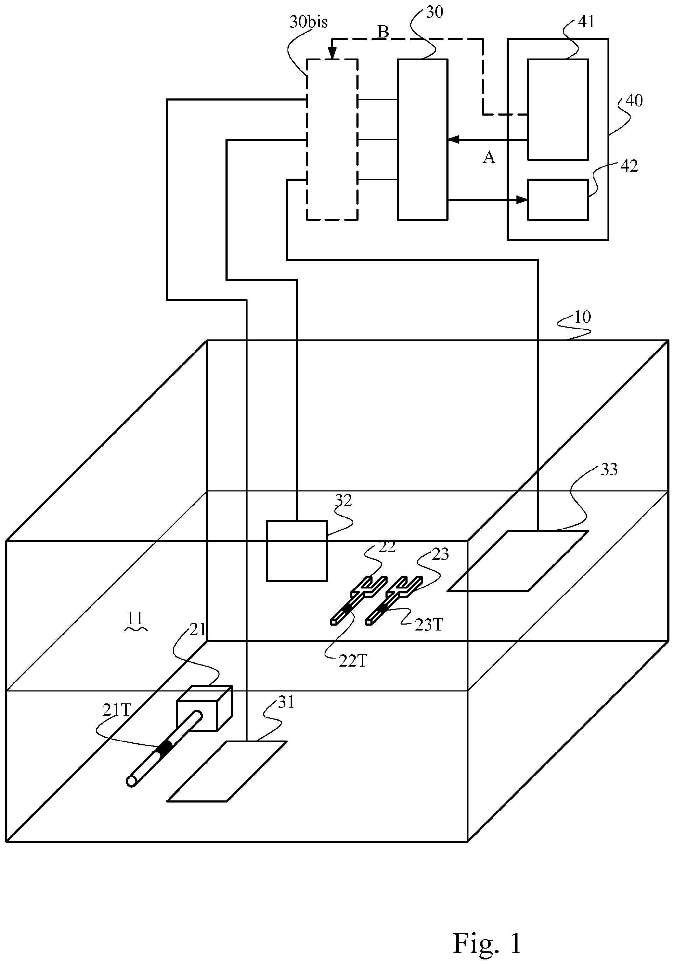

Le système d'inventaire représenté à la Fig. 1 est prévu pour inventorier des objets qui sont contenus dans un espace tel qu'un meuble, une armoire ou une servante d'atelier, qui peut contenir des éléments, tels que des étagères, en l'occurrence, à titre d'exemple, l'étagère 11, des tiroirs, des casiers, etc. Cet espace est délimité par une enceinte 10. Bien que cette enceinte 10 ait été représentée parallélépipédique, l'invention n'est pas limitée à cette forme particulière.

Les objets en question sont par exemple des outils (de référence générique 20) pour assurer la maintenance d'un atelier, d'une usine, etc., tels que le maillet 21 et les clefs 22 et 23 représentés, qui sont chacun pourvus d'un tag 20T RFID (Radio Frequency IDentification : Identification par radiofréquence), en l'occurrence les tags 21T, 22T et 23T.

Le système d'inventaire comprend encore un point de lecture 30 pourvu d'au moins une antenne (ici trois antennes 31, 32, et 33 respectivement sur la paroi inférieure, la paroi de fond et l'étagère 11 de l'enceinte 10) orientée de manière à émettre à l'intérieur de l'enceinte 10. La ou les antennes 31, 32 et 33 sont positionnées de manière que, compte tenu des propriétés des parois de l'enceinte 10, telles que leur réflexion ou leur absorption aux ondes électromagnétiques considérées, les ondes électromagnétiques qu'elles émettent soient confinées à l'intérieur de ladite enceinte 10 et ne soient plus présentes à l'extérieur de ladite enceinte 10.

Le point de lecture 30 est par exemple relié à un système de traitement 40, tel qu'un système informatique ou un ordinateur, qui comporte une unité de pilotage 41 pour piloter le point de lecture 30 pour son émission et une unité de traitement 42 pour notamment recevoir dudit point de lecture 30 des données, par exemple des données d'identification des tags 20T contenus dans l'enceinte 10, selon une application spécifique.

Comme déjà mentionné dans le préambule de la présente description, le principe de fonctionnement d'un tel système RFID est le suivant. Au commencement de la procédure d'identification, le point de lecture 30 émet, au moyen de sa ou ses antennes 31, 32 et 33, une onde électromagnétique, dite de réveil, modulée destinée à chaque tag 20 du système (ici, les tags 21T, 22T et 23T). A sa réception, un tag 20T, situé dans une zone de couverture où le champ électromagnétique généré par les antennes 31, 32 et 33 du point de lecture 30 est à un niveau suffisamment élevé, sort de son état de veille et devient ainsi actif. Il émet alors une donnée d'identification qui lui est propre sous forme d'une onde électromagnétique modulée. Cette donnée d'identification est reçue par le point de lecture 30 qui, par exemple, la transmet à l'unité de traitement 42 du système de traitement 40 pour traitement ultérieur conformément à une application dudit système 40.

Selon l'invention, l'unité de pilotage 41 est prévue pour commander la puissance d'émission de ladite onde électromagnétique de réveil émise par la ou chaque antenne 31, 32, 33 du point de lecture 30 de manière à ce que cette puissance soit conforme à un modèle de variation de puissance parmi un ensemble de modèle des variation de puissance préalablement déterminés, chaque modèle de variation de puissance étant lié à une configuration particulière de l'enceinte 10 et des objets 20 que ladite enceinte 10 est censée contenir au moment de l'inventaire.

Pour ce faire, deux modes de réalisation sont envisagés. Dans le premier, l'unité de pilotage 41 commande directement le point de lecture 30 (flèche A) pour que ses antennes 31, 32 et 33 émettent respectivement des ondes électromagnétiques de réveil selon un modèle de variation de puissance donné. Par exemple, l'unité de pilotage 41 est une unité logicielle du système de traitement 40.

Dans le second mode représenté en pointillés à la Fig. 1, l'unité de pilotage 41 commande (flèche B) une unité de contrôle de puissance 30bis pour que les antennes 31, 32 et 33 émettent respectivement des ondes électromagnétiques de réveil selon un modèle de variation de puissance donné. L'unité de contrôle de puissance 30bis est avantageusement une unité matérielle (hardware) qui fait l'interface entre les sorties antenne du point de lecture 30 et les antennes 31, 32 et 33. Elle est par exemple constituée d'amplificateurs à gain variable (non représentés) eux-mêmes pilotés par des signaux conformes au modèle de variation de puissance sélectionné par l'unité de pilotage 41. L'unité de pilotage 41 pilote également le point de lecture 30, soit pour que ses sorties antenne soient de puissance constante, soit pour que ses sorties antenne suivent également un modèle de variation de puissance.

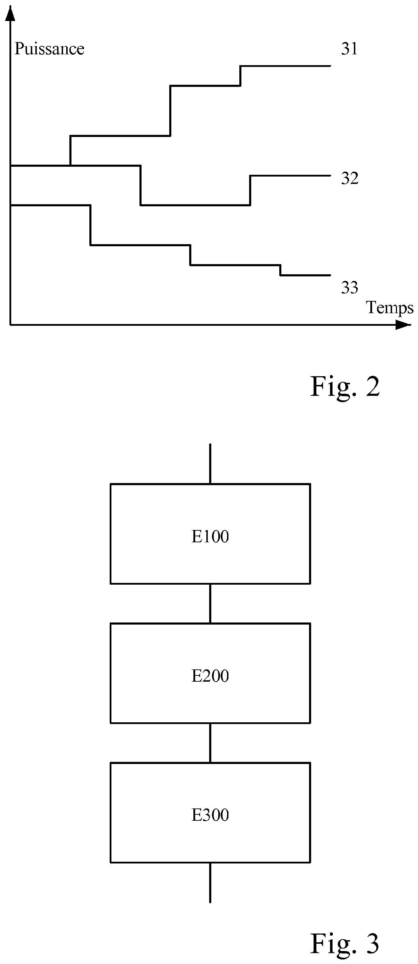

Un modèle de variation de puissance des ondes électromagnétiques émises par les antennes 31, 32, 33 dudit point de lecture 30 est défini par une suite d'émissions par la ou chaque antenne (ici 31, 32 et 33) selon des échelons à des niveaux de puissance différents d'un échelon à un autre et d'une antenne à une autre, si plusieurs antennes il y a. A la Fig. 2, on voit trois courbes, correspondant respectivement à trois modèles de variation de puissance différents, comportant des échelons de puissance et de durée différents pour respectivement les trois antennes 31, 32 et 33 du système d'inventaire de la Fig. 1. Alors que pour l'antenne 31, le niveau de puissance d'émission croît à chaque échelon, pour l'antenne 32, il reste constant puis décroît à l'échelon suivant et ensuite croît au dernier échelon. Pour la troisième antenne 33, le niveau de puissance d'émission décroît à chaque échelon.

Ainsi, à chaque modification de la puissance d'émission de l'onde de réveil sur une antenne, de nouveaux minima et maxima de puissance sont créés, dans des positions aussi nouvelles. De nouveaux tags peuvent être alors sollicités par l'onde de réveil. Suite à ces modifications, pour l'exécution complète d'un modèle de variation de puissance donné, un certain nombre de tags ont été sollicités et sont devenus actifs, à un moment ou un autre de cette exécution. Une part plus ou moins importante de l'espace intérieur de ladite enceinte 10 est balayée par ces ondes électromagnétiques de réveil dont la puissance est suffisante pour rendre actifs les tags 20T des objets 20 contenus dans cet espace. Le modèle de variation de puissance qui est adopté pour réaliser l'inventaire est celui dont cet espace correspond à l'espace intérieur de l'enceinte 10.

Un système d'inventaire selon la présente invention est prévu pour fonctionner, d'abord dans une phase d'apprentissage puis, par la suite, dans une phase d'exploitation.

Dans la phase d'apprentissage, est déterminé un modèle de variation de puissance qui est optimisé pour une configuration particulière de l'enceinte 10 et des objets 20 (pourvus de leurs tags) qui est celle objet de l'apprentissage.

Une configuration de l'enceinte 10 est définie par la présence ou l'absence d'une étagère, d'un tiroir, d'un casier, etc. dans le meuble que constitue l'enceinte. Une configuration des objets 20 est définie par un nombre d'objets, de type particulier, par exemple : maillet, clef plate, clef allen, tournevis, etc. placés en des endroits particuliers de l'enceinte 10.

Le modèle de variation de puissance qui est optimisé pour une configuration particulière de l'enceinte 10 et des objets 20 est d'abord sélectionné parmi un ensemble de modèles prédéterminés comme celui qui donne le meilleur taux de lecture pour la configuration de l'enceinte et des objets considérée et est ensuite optimisé par détermination d'une durée de lecture optimale. Il est également celui qui permet une répétabilité de l'inventaire effectué pour cette configuration.

Le taux de lecture est le rapport du nombre de tags 20T lus par le point de lecture 30 par le nombre de tags 20T présents dans l'enceinte 10.

La durée de lecture optimale est la durée au delà de laquelle le nombre de tags lus n'augmente plus de manière significative même pour une poursuite de la lecture sur une durée importante.

La répétabilité d'inventaire d'un modèle de puissance donné est obtenue lorsque, pour une configuration particulière, le nombre de tags lus est identique ou quasi-identique pour un nombre déterminé d'inventaires répétés, par exemple 10.

Dans la phase d'exploitation, le modèle de variation de puissance qui a été déterminé et optimisé pour la configuration particulière de l'enceinte 10 et des objets 20 lors de la phase d'apprentissage, est utilisé pour réaliser des inventaires.

On a représenté à la Fig. 3, un diagramme montrant les différentes étapes mises en oeuvre par un procédé d'inventaire d'objets selon la présente invention pour une configuration donnée de l'enceinte 10 et des objets 20, lors de sa phase d'exploitation. Ce procédé est mis en oeuvre par le point de lecture 30 de la Fig. 1. Il comporte :
- une étape E100 de sélection d'un modèle de variation de puissance parmi un ensemble de modèles de variation de puissance préalablement déterminés, chaque modèle de variation de puissance étant défini par une suite d'émissions par ladite ou chaque antenne selon des échelons à des niveaux de puissance et des durées différents d'un échelon à un autre, et de déclenchement de l'exécution dudit modèle de variation de puissance,
- une étape E200 de lecture des données d'identification émises par les tags suite à leur activation aux réceptions des différentes ondes électromagnétiques de réveil émises par ledit point de lecture 30 au fur et à mesure de l'exécution dudit modèle de variation de puissance, et
- une étape E300 de traitement des données d'identification précédemment lues.

Ce traitement de l'étape E300 peut consister à répertorier tous les objets qui sont présents dans le meuble que constitue l'enceinte 10. Ce traitement permet aussi à l'utilisateur de visualiser le résultat de l'inventaire.

L'étape E100 est par exemple mise en oeuvre par l'unité de pilotage 41 du système de traitement 40. Les étapes E200 et E300 sont par exemple mises en oeuvre par l'unité de traitement 42.

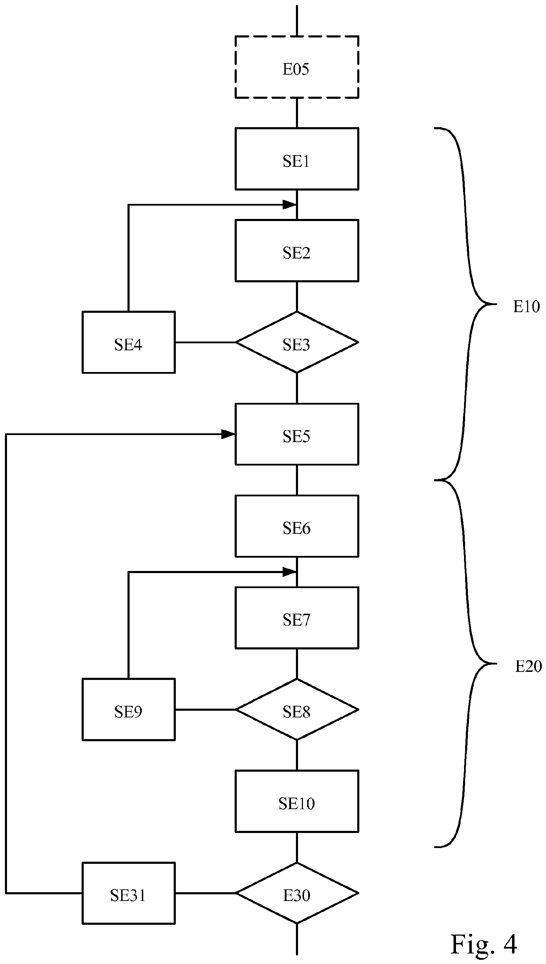

On a représenté à la Fig. 4, un diagramme montrant les différentes étapes mises en oeuvre par un procédé d'inventaire lors de sa phase d'apprentissage. Il comporte une étape E10 de sélection, parmi un ensemble prédéterminé de modèles de variation de puissance M₁ à M_{N}, du modèle de variation de puissance optimisé qui, pour la configuration de l'enceinte 10 et des objets 20 considérée, donne le taux de lecture optimal par rapport aux autres modèles de variation de puissance dudit ensemble de modèles.

Dans une variante de réalisation, préalablement à l'étape E10, une étape E05 détermine l'ensemble de modèles de variation de puissance parmi lesquels l'étape E10 sélectionne le modèle de variation de puissance optimisé. Par exemple, l'étape 05 consiste à déterminer le nombre de tags 20 lus par le point de lecture 30 au cours d'un inventaire standard M_{S} effectué à puissance constante pendant un temps standard ts. Si ce nombre est faible, l'ensemble de modèles déterminé à l'étape 05 contiendra des modèles à fortes variations de puissance et en nombre assez élevé. Par contre, si ce nombre est fort, l'ensemble de modèles déterminé à l'étape 05 contiendra des modèles à faibles variations de puissance et en nombre assez faible.

Cette étape E10 comporte les sous-étapes suivantes :
- une sous-étape SE1 de sélection d'un modèle de variation de puissance Mₙ parmi des modèles de variation de puissance prédéterminés M₁ à M_{N},
- une sous-étape SE2 de réalisation d'un inventaire I(Mₙ, tₛ) en appliquant ledit modèle de variation de puissance Mₙ sélectionné et de détermination du taux de lecture de tags τₙ pour cet inventaire I(Mₙ, tₛ) (Nb : la durée de mise en oeuvre de l'inventaire est tₛ, une durée prédéterminée standard),
- une sous-étape SES de vérification que tous les modèles de variation de puissance prédéterminés M₁ à M_{N} ont été appliqués. Si tel ne serait pas le cas, la sous-étape SE4 de sélection d'un autre modèle de variation de puissance prédéterminé est mise oeuvre, puis de nouveau la sous-étape SE2, etc.
- si tous les modèles de variation de puissance prédéterminés M₁ à M_{N} ont été appliqués, une sous-étape SES de classement des modèles de variation de puissance prédéterminés M₁ à M_{N} selon leur taux de lecture τ₁ à τ_{N} respectifs et de sélection de celui, dit modèle de variation de puissance sélectionné Mₘₐₓ ayant donné lieu au taux de lecture de tags τₘₐₓ le plus élevé.

Ladite phase d'apprentissage peut également comporter une étape E20 de détermination de la durée optimale tₒₚₜ du modèle de variation de puissance Mₘₐₓ sélectionné à la sous-étape SE5. Cette durée optimale tₒₚₜ est la durée au delà de laquelle le nombre de tags lus n'augmente plus de manière significative. Elle pourra également être inférieure à une durée maximale t_{Max} même si le nombre de tags lus augmente de manière significative avec le temps. Cette durée maximale t_{Max} est par exemple configurable par l'utilisateur, selon ses *desiderata.*

Cette étape E20 comporte les sous-étapes suivantes :
- une sous-étape SE6 de sélection d'une durée tᵢ de mise en oeuvre du modèle de variation de puissance sélectionné Mₘₐₓ parmi un ensemble de durées prédéterminées t₁ à t_{I} (pouvant être de plus inférieures ou égales à t_{Max}),
- une sous-étape SE7 de réalisation d'un inventaire I(Mₘₐₓ, tᵢ) en appliquant ledit modèle de variation de puissance sélectionné Mₘₐₓ pendant la durée tᵢ sélectionnée et de détermination du taux de lecture de tags τᵢ de cet inventaire I(Mₘₐₓ, tᵢ),
- une sous-étape SE8 de vérification que toutes les durées prédéterminées ont été sélectionnées. Si tel ne serait pas le cas, la sous-étape SE9 de sélection d'une autre durée est mise oeuvre, puis la sous-étape SE7 est mise en oeuvre,
- une sous-étape SE10, mise en oeuvre si toutes les durées prédéterminées t₁ à t_{I} ont été sélectionnées, de détermination de la durée optimale tₒₚₜ au delà de laquelle le nombre de tags lus n'augmente plus de manière significative même pour une durée importante. Si une durée tₒₚₜ ne peut pas être déterminée car le taux de lecture augmente toujours avec le temps, la durée optimale sera la valeur t_{Max}.

Elle peut également comporter une étape E30 de vérification de la répétabilité du procédé d'inventaire pour le modèle de variation de puissance sélectionné Mₘₐₓ mis en oeuvre pendant la durée optimisée tₒₚₜ. Ainsi, si plusieurs inventaires I(Mₘₐₓ, tₒₚₜ) sont réalisés et ne donnent pas un taux de lecture compris dans un intervalle prédéterminé et fonction de l'écart type, est mise en oeuvre une sous-étape SE31 de retrait du modèle Mₘₐₓ considéré de la liste des modèles présents à la sous-étape SE5, laquelle est de nouveau mise en oeuvre pour sélectionner de cette liste tronquée le modèle de variation de puissance qui donne maintenant le taux de lecture le plus élevé. Les étapes E20 et E30 sont de nouveau mises en oeuvre avec ce nouveau modèle Mₘₐₓ.

Si, à l'issue de ces étapes E20 et E30, aucun modèle de variation de puissance parmi les modèles M₁ à M_{N} n'a été retenu, alors le modèle *in fine* pris en compte est le modèle standard M_{S} à puissance constante et l'inventaire est effectué pour une durée standard ts.

Le déclenchement de la phase d'apprentissage est réalisé à la première mise en marche du système d'inventaire ou, encore, sur demande de l'utilisateur.

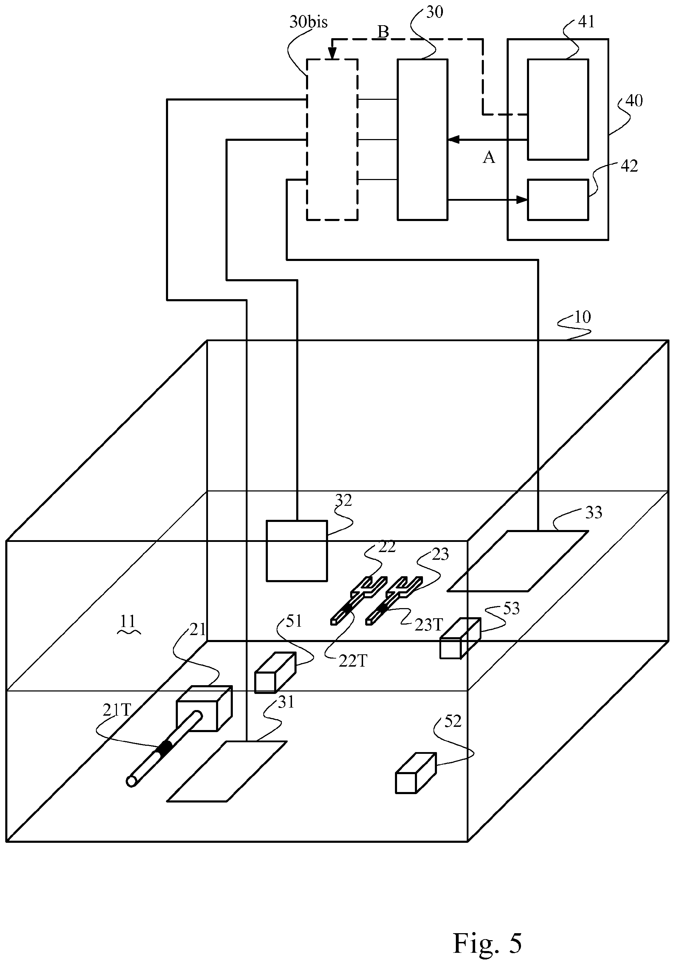

Le système d'inventaire représenté à la Fig. 5 est identique à celui de la Fig. 1 à l'exception du fait qu'il comporte en outre des balises de référence 50 (en l'occurrence, 51, 52 et 53) qui sont placées à des endroits fixes à l'intérieur de ladite enceinte 10. Ces balises de référence 50 sont des tags qui sont, par exemple, fixés sur la face intérieure des parois de l'enceinte 10 ou sur des éléments fixes de celle-ci, tels que des casiers, des étagères, des tiroirs contenus dans l'enceinte 10. Les données d'identification de ces tags sont spécifiques afin que le point de lecture 30 puisse les différencier des tags des objets à inventorier.

Après émission de l'onde électromagnétique de réveil, les balises de référence 50 qui sont situées dans une zone de couverture où le champ électromagnétique généré par les antennes 31, 32 et 33 du point de lecture 30 est à un niveau suffisamment élevé sont activées et émettent alors leurs propres données d'identification, les autres balises ne recevant pas un champ électromagnétique de niveau suffisant, n'étant pas activées. Le point de lecture 30 est alors en mesure d'établir une carte des balises de référence 50 qui sont actives, c'est-à-dire qui ont répondu à l'onde électromagnétique de réveil émise par le point de lecture 30.

Comme précédemment pour le mode de réalisation de la Fig. 1, le système d'inventaire de la Fig. 5 est prévu pour fonctionner, d'abord dans une phase d'apprentissage puis, par la suite, dans une phase d'exploitation.

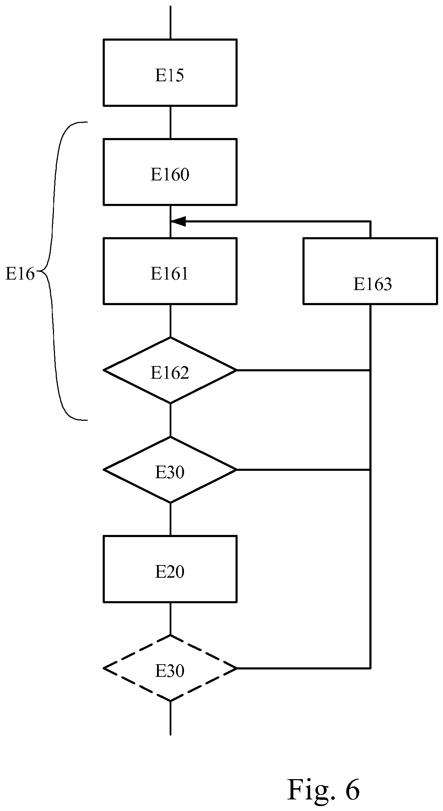

Lors de la phase d'apprentissage, pour une configuration particulière de l'enceinte 10 et des objets 20 (pourvus de leurs tags), est, d'une part, établie une carte des balises de référence 50 qui sont actives et est, d'autre part, déterminé un modèle de variation de puissance optimisé qui sera associé à ladite carte établie. Cette phase d'apprentissage selon ce second mode de réalisation est décrite en relation avec la Fig. 6. Elle comporte les étapes suivantes :
- une étape E15 d'établissement d'une carte de balises de référence actives C_{c} pour la configuration de l'enceinte 10 et des objets 20 considérée. Cette étape est réalisée en utilisant un modèle standard à puissance constante sur une durée standard ts.
- une étape E16 de détermination d'un modèle de variation de puissance optimisé Mₒₚₜ (en particulier, de détermination de paramètres dudit modèle) donnant un taux de lecture supérieur à un taux seuil, par exemple 99%.

L'étape de détermination des paramètres comprend les sous-étapes suivantes :
- une sous-étape E160 de sélection d'un modèle de variation de puissance M_{P} parmi un ensemble de modèles de variation de puissance prédéterminé, ledit modèle de variation de puissance M_{P} correspondant *a priori* à la configuration de l'enceinte 10 et des objets considérée,
- une sous-étape E161 de réalisation d'un inventaire I(Mp, t_{S}) en utilisant ledit modèle de variation de puissance M_{P} pendant un temps t_{S} prédéterminé standard, et
- une sous-étape E162 de vérification que le taux de lecture est supérieur à un taux seuil, par exemple 99%. Si tel n'est pas le cas, les paramètres du modèle de variation de puissance M_{P} sont modifiés (sous-étape E163), par exemple par incréments ou décréments et le modèle devient M_{Pm}. Les étapes E161 et E162 sont de nouveau mises en oeuvre pour le modèle M_{Pm} et le temps t_{S}. Si tel est le cas, le modèle de variation de puissance M_{P} ou M_{Pm} ayant été utilisé pour la réalisation du dernier inventaire est conservé et est associé à la carte établie C_{c} à l'étape E15 pour la configuration de l'enceinte 10 et des objets 20 considérée.

Le modèle de variation de puissance M_{P} sélectionné à l'étape E160 parmi un ensemble de modèles de variation de puissance prédéterminé peut l'être en fonction du nombre de tags lus pendant un inventaire standard I(Ms, ts), à l'instar de l'étape E05 du premier mode de réalisation.

Comme précédemment, ladite phase d'apprentissage peut également comporter une étape E30 de vérification de la répétabilité du procédé d'inventaire pour le modèle optimisé M_{Sm} et une étape E20 de détermination de la durée optimale tₒₚₜ du modèle sélectionné M_{Sm}. L'étape E30 peut être répétée pour le modèle optimisé M_{Sm} pour la durée optimale tₒₚₜ.

Ces étapes E20 et E30 étant identiques à celles du premier mode de réalisation ne sont pas décrites de nouveau.

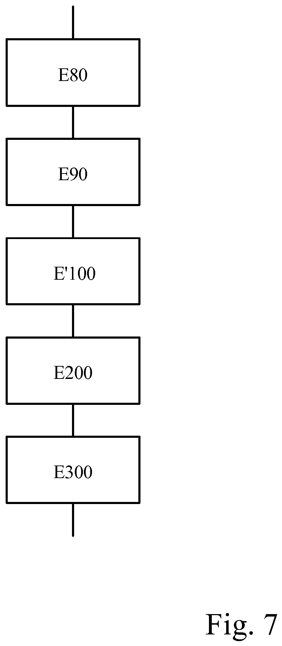

Le procédé d'inventaire dans sa phase d'exploitation mis en oeuvre par le point de lecture 30 est le suivant décrit en relation avec la Fig. 7. Le point de lecture 30 dispose de plusieurs modèles de variation de puissance à chacun desquels a été associée une carte des balises de référence 50 actives lors de la phase d'apprentissage. Le procédé d'inventaire selon l'invention comporte alors :
- une étape E80 d'établissement d'une carte des balises de références 50 actives au moment considéré, et
- une étape E90 de sélection du modèle de variation de puissance qui est associé à la carte des balises de référence 50 actives établie à l'étape E80.

Ces étapes E80 et E90 sont suivies de l'étape E'100 de déclenchement de l'exécution du modèle de variation de puissance qui a été sélectionné à l'étape E90 et des étapes E200 et E300 identiques à celles décrites précédemment et qui, de ce fait, ne sont pas de nouveau décrites.

## Revendications

1. Système d'inventaire d'objets contenus dans un espace délimité par une enceinte (10), ledit système comprenant un tag (20T) fixé à chacun des objets à inventorier (20) et un point de lecture (30) pourvu d'au moins une antenne (31, 32, 33) pour émettre une onde électromagnétique de réveil confinée à l'intérieur de ladite enceinte (10) afin qu'un tag (20T), à sa réception, devienne actif et émette alors ses données d'identification à destination dudit point de lecture (30), ledit point de lecture (30) comporte des moyens (41, 42) pour commander la puissance d'émission de ladite onde électromagnétique de réveil conformément à un modèle de variation de puissance défini par une suite d'émissions par ladite ou chaque antenne (31, 32, 33) selon des échelons à des niveaux de puissance différents d'un échelon à un autre afin de réaliser ledit inventaire, ledit point de lecture (30) étant prévu pour fonctionner dans un mode d'apprentissage dans lequel un modèle de variation de puissance est établi pour chaque configuration particulière de l'enceinte (10) et des objets (20) qu'elle contient, ledit modèle de variation de puissance étant utilisé pour réaliser ledit inventaire étant celui correspondant à la configuration d'exploitation de l'enceinte (10) et des objets (20) qu'elle contient et ledit modèle de variation de puissance étant établi par sélection parmi un ensemble de modèles de variation de puissance prédéterminés, ledit modèle de variation de puissance sélectionné étant celui qui est optimisé pour la configuration d'exploitation de l'enceinte (10) et des objets (20) considéré.

2. Système d'inventaire selon la revendication 1, **caractérisé en ce qu'**il comporte des balises de référence (50) placées à des endroits fixes dans ladite enceinte (10), **en ce que** ledit point de lecture (30) est prévu pour, sur la base des données d'identification reçus des balises de référence (50), établir une carte des balises de référence actives, **en ce qu'**à chaque modèle de variation de puissance établi lors de la phase d'apprentissage pour chaque configuration particulière de l'enceinte (10) et des objets (20) qu'elle contient est associée une carte des balises de référence actives, et **en ce que** le modèle de variation de puissance utilisé pour réaliser ledit inventaire est celui associé à la carte des balises de référence (50) actives pour la configuration d'exploitation de l'enceinte (10) et des objets (20) qu'elle contient au moment dudit inventaire.

3. Système d'inventaire selon une des revendications précédentes, **caractérisé en ce que** lesdits moyens pour commander la puissance d'émission de ladite onde électromagnétique de réveil par ladite ou chaque antenne sont constitués d'une unité de commande (41) commandant directement ledit point de lecture (40) pour ce faire.

4. Système d'inventaire selon une des revendications précédentes, **caractérisé en ce que** lesdits moyens pour commander la puissance d'émission de ladite onde électromagnétique de réveil par ladite ou chaque antenne comprennent une unité de contrôle de puissance (30bis) faisant l'interface entre la ou les sorties antenne dudit point de lecture (30) et la ou lesdites antennes (31, 32, 33).

5. Procédé d'inventaire d'objets (20) contenus dans un espace délimité par une enceinte (10) au moyen d'un système d'inventaire comprenant un tag fixé à chacun des objets et un point de lecture (30) pourvu d'au moins une antenne (31, 32, 33) pour émettre une onde électromagnétique de réveil confinée à l'intérieur de ladite enceinte (10) afin qu'un tag (20T), à sa réception, devienne actif et émette alors ses données d'identification à destination dudit point de lecture (30), ledit point de lecture (30) étant prévu pour fonctionner dans un mode d'apprentissage dans lequel un modèle de variation de puissance est établi pour chaque configuration particulière de l'enceinte (10) et des objets (20) qu'elle contient, ledit modèle de variation de puissance étant utilisé pour réaliser ledit inventaire étant celui correspondant à la configuration d'exploitation de l'enceinte (10) et des objets (20) qu'elle contient et le procédé comportant les étapes suivantes mises en oeuvre par ledit point de lecture,
- une étape (E100) de sélection d'un modèle de variation de puissance défini par une suite d'émissions par ladite ou chaque antenne selon des échelons à des niveaux de puissance différents d'un échelon à un autre, et de déclenchement de l'exécution dudit modèle de variation de puissance sélectionné, et ledit modèle de variation de puissance est établi par sélection parmi un ensemble de modèles de variation de puissance prédéterminés, ledit modèle de variation de puissance sélectionné étant celui qui est optimisé pour la configuration d'exploitation de l'enceinte (10) et des objets (20) considéré
- une étape (E200) de lecture des données d'identification émises par les tags suite à leur activation aux réceptions des différentes ondes électromagnétiques de réveil émises par ladite ou lesdites antennes au fur et à mesure de l'exécution dudit modèle de variation de puissance, et
- une étape (E300) de traitement des données d'identification reçues lors de ladite suite d'émissions.

6. Procédé d'inventaire selon la revendication 5, **caractérisé en ce que** ledit procédé comporte ladite phase d'apprentissage pendant laquelle un modèle de variation de puissance est établi pour chaque configuration particulière de l'enceinte (10) et des objets (20) qu'elle contient, ledit modèle de variation de puissance utilisé pour réaliser ledit inventaire étant celui correspondant à la configuration d'exploitation de l'enceinte et des objets qu'elle contient.

7. Procédé d'inventaire selon la revendication 6, **caractérisé en ce que** ladite phase d'apprentissage comporte une étape (E10) de sélection, parmi un ensemble de modèles de variation de puissance prédéterminés, du modèle de variation de puissance qui, pour la configuration de l'enceinte et des objets qu'elle contient, donne le taux de lecture optimal par rapport aux autres modèles de variation de puissance dudit ensemble de modèles.

8. Procédé d'inventaire selon la revendication 7, **caractérisé en ce que** ladite phase d'apprentissage comporte les étapes suivantes :
- une étape (E15) d'établissement d'une carte de balises de référence actives, et
- une étape (E16) de détermination des paramètres d'un modèle de variation de puissance donnant un taux de lecture supérieur à un taux seuil.

9. Procédé d'inventaire selon la revendication 7 ou 8, **caractérisé en ce que** ladite phase d'apprentissage comporte une étape (E20) de détermination de la durée optimale du modèle sélectionné.

10. Procédé d'inventaire selon une des revendications 7 à 9, **caractérisé en ce que** ladite phase d'apprentissage comporte au moins une étape (E30) de vérification de la répétabilité du procédé d'inventaire pour chacun des modèles de variation de puissance sélectionné et optimisé.

## Patentansprüche

1. Inventarisierungssystem von in einem von einem Gehäuse (10) begrenzten Raum enthaltenen Objekten, wobei das System ein an jedem der zu inventarisierenden Objekte (20) befestigtes Tag (20T) und einen Lesepunkt (30) enthält, der mit mindestens einer Antenne (31, 32, 33) versehen ist, um eine auf das Innere des Gehäuses (10) beschränkte elektromagnetische Weckwelle zu emittieren, damit ein Tag (20T) bei ihrem Empfang aktiv wird und dann seine Identifikationsdaten an den Lesepunkt (30) sendet, der Lesepunkt (30) weist Einrichtungen (41, 42) auf, um die Emissionsleistung der elektromagnetischen Weckwelle entsprechend einem Leistungsänderungsmodell zu steuern, das von einer Folge von Emissionen durch die oder jede Antenne (31, 32, 33) gemäß Stufen auf von einer Stufe zu einer anderen unterschiedlichen Leistungspegeln definiert wird, um die Inventarisierung durchzuführen, wobei der Lesepunkt (30) vorgesehen ist, um in einem Lernmodus zu arbeiten, bei dem ein Leistungsänderungsmodell für jede bestimmte Konfiguration des Gehäuses (10) und der in ihm enthaltenen Objekte (20) erstellt wird, wobei das Leistungsänderungsmodell, das verwendet wird, um die Inventarisierung durchzuführen, dasjenige ist, das der Betriebskonfiguration des Gehäuses (10) und der in ihm enthaltenen Objekte (20) entspricht, und das Leistungsänderungsmodell durch Auswahl aus einer Gruppe von vorbestimmten Leistungsänderungsmodellen erstellt wird, wobei das ausgewählte Leistungsänderungsmodell dasjenige ist, das für die Betriebskonfiguration des betroffenen Gehäuses (10) und der Objekte (20) optimiert wird.

2. Inventarisierungssystem nach Anspruch 1, **dadurch gekennzeichnet, dass** es Bezugsmarker (50) aufweist, die an ortsfesten Stellen im Gehäuse (10) platziert sind, dass der Lesepunkt (30) vorgesehen ist, um auf der Basis von von den Bezugsmarkern (50) empfangenen Identifikationsdaten eine Karte der aktiven Bezugsmarker zu erstellen, dass jedem Leistungsänderungsmodell, das in der Lernphase für jede bestimmte Konfiguration des Gehäuses (10) und der in ihm enthaltenen Objekte (20) erstellt wird, eine Karte der aktiven Bezugsmarker zugeordnet wird, und dass das Leistungsänderungsmodell, das verwendet wird, um die Inventarisierung durchzuführen, dasjenige ist, das der Karte der aktiven Bezugsmarker (50) für die Betriebskonfiguration des Gehäuses (10) und der in ihm enthaltenen Objekte (20) zum Zeitpunkt der Inventarisierung zugeordnet ist.

3. Inventarisierungssystem nach einem der vorhergehenden Ansprüche, **dadurch gekennzeichnet, dass** die Einrichtungen, um die Emissionsleistung der elektromagnetischen Weckwelle durch die oder jede Antenne zu steuern, aus einer Steuereinheit (41) bestehen, die hierzu direkt den Lesepunkt (40) steuert.

4. Inventarisierungssystem nach einem der vorhergehenden Ansprüche, **dadurch gekennzeichnet, dass** die Einrichtungen, um die Emissionsleistung der elektromagnetischen Weckwelle durch die oder jede Antenne zu steuern, eine Leistungskontrolleinheit (30bis) enthalten, die die Schnittstelle zwischen dem oder den Antennenausgängen des Lesepunkts (30) und der oder den Antennen (31, 32, 33) bildet.

5. Inventarisierungsverfahren von in einem von einem Gehäuse (10) begrenzten Raum enthaltenen Objekten (20) mittels eines Inventarisierungssystems, das ein an jedem der Objekte befestigtes Tag und einen Lesepunkt (30) enthält, der mit mindestens einer Antenne (31, 32, 33) versehen ist, um eine auf das Innere des Gehäuses (10) beschränkte elektromagnetische Weckwelle zu emittieren, damit ein Tag (20T) bei ihrem Empfang aktiv wird und dann seine Identifikationsdaten an den Lesepunkt (30) sendet, wobei der Lesepunkt (30) vorgesehen ist, um in einem Lernmodus zu arbeiten, bei dem ein Leistungsänderungsmodell für jede bestimmte Konfiguration des Gehäuses (10) und der in ihm enthaltenen Objekte (20) erstellt wird, wobei das Leistungsänderungsmodell, das verwendet wird, um die Inventarisierung durchzuführen, dasjenige ist, das der Betriebskonfiguration des Gehäuses (10) und der in ihm enthaltenen Objekte (20) entspricht, und das Verfahren die folgenden vom Lesepunkt durchgeführten Schritte aufweist,
- einen Schritt (E100) der Auswahl eines durch eine Folge von Emissionen durch die oder jede Antenne gemäß Stufen auf von einer Stufe zu einer anderen unterschiedlichen Leistungspegeln definierten Leistungsänderungsmodells, und des Auslösens der Ausführung des ausgewählten Leistungsänderungsmodells, und das Leistungsänderungsmodell wird durch Auswahl aus einer Gruppe von vorbestimmten Leistungsänderungsmodellen erstellt, wobei das ausgewählte Leistungsänderungsmodell dasjenige ist, das für die Betriebskonfiguration des betroffenen Gehäuses (10) und der Objekte (20) optimiert ist,
- einen Schritt (E200) des Lesens der Identifikationsdaten, die von den Tags nach ihrer Aktivierung bei Empfang der verschiedenen elektromagnetischen Weckwellen gesendet werden, die von der oder den Antennen während der Ausführung des Leistungsänderungsmodells emittiert werden, und
- einen Schritt (E300) der Verarbeitung der bei der Folge von Emissionen empfangenen Identifikationsdaten.

6. Inventarisierungsverfahren nach Anspruch 5, **dadurch gekennzeichnet, dass** das Verfahren die Lernphase aufweist, während der ein Leistungsänderungsmodell für jede bestimmte Konfiguration des Gehäuses (10) und der in ihm enthaltenen Objekte (20) erstellt wird, wobei das Leistungsänderungsmodell, das verwendet wird, um die Inventarisierung durchzuführen, dasjenige ist, das der Betriebskonfiguration des Gehäuses und der in ihm enthaltenen Objekte entspricht.

7. Inventarisierungsverfahren nach Anspruch 6, **dadurch gekennzeichnet, dass** die Lernphase einen Schritt (E10) der Auswahl, aus einer Gruppe von vorbestimmten Leistungsänderungsmodellen, des Leistungsänderungsmodells aufweist, das für die Konfiguration des Gehäuses und der in ihm enthaltenen Objekte die optimale Leserate bezüglich der anderen Leistungsänderungsmodelle der Gruppe von Modellen ergibt.

8. Inventarisierungsverfahren nach Anspruch 7, **dadurch gekennzeichnet, dass** die Lernphase die folgenden Schritte aufweist:
- einen Schritt (E15) des Erstellens einer Karte von aktiven Bezugsmarkern, und
- einen Schritt (E16) der Bestimmung der Parameter eines Leistungsänderungsmodells, das eine höhere Leserate als eine Schwellenrate ergibt.

9. Inventarisierungsverfahren nach Anspruch 7 oder 8, **dadurch gekennzeichnet, dass** die Lernphase einen Schritt (E20) der Bestimmung der optimalen Dauer des ausgewählten Modells aufweist.

10. Inventarisierungsverfahren nach einem der Ansprüche 7 bis 9, **dadurch gekennzeichnet, dass** die Lernphase mindestens einen Schritt (E30) der Überprüfung der Wiederholbarkeit des Inventarisierungsverfahrens für jedes der ausgewählten und optimierten Leistungsänderungsmodelle aufweist.

## Claims

1. System for inventorying objects which are contained in a space which is delimited by an enclosure (10), said system comprising a tag (20T) attached to each of the objects (20) to be inventoried and a reader (30) which is provided with at least one antenna (31, 32, 33) for emitting a wakeup electromagnetic wave confined inside said enclosure (10) in order for a tag (20T), when it is received, to become active and then transmit its identification data to said reader (30), said reader (30) comprising means (41, 42) for controlling the power at which said wakeup electromagnetic wave is emitted in accordance with a power variation model defined by a series of emissions by said or each antenna (31, 32, 33) in stages at power levels which are different from one stage to another in order to carry out said inventorying, said reader (30) being provided to operate in a training mode in which a power variation model is established for each particular configuration of the enclosure (10) and of the objects (20) which it contains, said power variation model used to carry out said inventorying being the one corresponding to the configuration of use of the enclosure (10) and of the objects (20) which it contains and said power variation model being established by selecting from among a set of predetermined power variation models, said selected power variation model being the one which is optimized for the configuration of use of the enclosure (10) and of the objects (20) which is considered.

2. Inventorying system according to Claim 1, **characterized in that** it comprises reference beacons (50) placed at fixed points in said enclosure (10), **in that** said reader (30) is provided to establish, on the basis of the identification data received from the reference beacons (50), a map of the active reference beacons, **in that** a map of the active reference beacons is associated with each power variation model established during the training phase for each particular configuration of the enclosure (10) and of the objects (20) which it contains, and **in that** the power variation model used to carry out said inventorying is the one associated with the map of the active reference beacons (50) for the configuration of use of the enclosure (10) and of the objects (20) which it contains at the moment of said inventorying.

3. Inventorying system according to one of the preceding claims, **characterized in that** said means for controlling the power at which said wakeup electromagnetic wave is emitted by said or each antenna are composed of a control unit (41) directly controlling said reader (40) for this purpose.

4. Inventorying system according to one of the preceding claims, **characterized in that** said means for controlling the power at which said wakeup electromagnetic wave is emitted by said or each antenna comprise a power control unit (30bis) interfacing between the one or more antenna outputs of said reader (30) and said one or more antennas (31, 32, 33).

5. Method for inventorying objects (20) which are contained in a space which is delimited by an enclosure (10) by means of an inventorying system comprising a tag attached to each of the objects and a reader (30) which is provided with at least one antenna (31, 32, 33) for emitting a wakeup electromagnetic wave confined inside said enclosure (10) in order for a tag (20T), when it is received, to become active and then transmit its identification data to said reader (30), said reader (30) being provided to operate in a training mode in which a power variation model is established for each particular configuration of the enclosure (10) and of the objects (20) which it contains, said power variation model used to carry out said inventorying being the one corresponding to the configuration of use of the enclosure (10) and of the objects (20) which it contains and the method comprising the following steps which are implemented by the reader:
- a step (E100) of selecting a power variation model defined by a series of emissions by said or each antenna in stages at power levels which are different from one stage to another, and of triggering the execution of said selected power variation model, and said power variation model is established by selecting from among a set of predetermined power variation models, said selected power variation model being the one which is optimized for the configuration of use of the enclosure (10) and of the objects (20) which is considered,
- a step (E200) of reading the identification data transmitted by the tags after they are activated when the various wakeup electromagnetic waves emitted by said one or more antennas as said power variation model is executed are received, and
- a step (E300) of processing the identification data which are received during said series of emissions.

6. Inventorying method according to Claim 5, **characterized in that** said method comprises said training phase during which a power variation model is established for each particular configuration of the enclosure (10) and of the objects (20) which it contains, said power variation model used to carry out said inventorying being the one corresponding to the configuration of use of the enclosure and of the objects which it contains.

7. Inventorying method according to Claim 6, **characterized in that** said training phase comprises a step (E10) of selecting, from among a set of predetermined power variation models, the power variation model which, for the configuration of the enclosure and of the objects which it contains, gives the optimal read rate with respect to the other power variation models in said set of models.

8. Inventorying method according to Claim 7, **characterized in that** said training phase comprises the following steps:
- a step (E15) of establishing a map of active reference beacons, and
- a step (E16) of determining the parameters of a power variation model giving a read rate which is greater than a threshold rate.

9. Inventorying method according to Claim 7 or 8, **characterized in that** said training phase comprises a step (E20) of determining the optimal duration of the selected model.

10. Inventorying method according to one of Claims 7 to 9, **characterized in that** said training phase comprises at least one step (E30) of verifying the repeatability of the inventorying method for both the selected and the optimized power variation model.
